# EUROPEAN PATENT APPLICATION

(11) **EP 3 854 206 A1**
(43) Date of publication of application: **28.07.2021**
(21) Application number: 19861429.9
(22) Date of filing: 17.09.2019
(51) Int. Cl.: A01J 5/04, A01J 7/00

(54) **MILKING DEVICE**

(30) Priority: 19.09.2018 JP 2018174716
(71) Applicant: Tokuyama Corporation, Shunan-shi, Yamaguchi 745-8648 (JP)
(72) Inventor: KONDO, Hitoshi, Shunan-shi, Yamaguchi 745-8648 (JP); INUI, Yoji, Shunan-shi, Yamaguchi 745-8648 (JP)
(74) Representative: HGF
(86) International application number: PCT/JP2019/036331
(87) International publication number: WO 2020/059692

(57) **Abstract**

Provided is a milking device that makes it possible to more reliably and effectively curb backflow of milk and reduce the risk of infection leading to mastitis. This milking device 10 is provided with a teat cup 1 comprising a liner 3 including: a bore part 3b that is arranged inside a cylindrical shell 2 such that a predetermined space is formed with an inner surface of the shell 2 and that is elastically deformable between an open state and a closed state; a mouthpiece part 3a which is arranged at one end side of the bore part 3b and closes off one end part of the shell 2 and into which a teat is inserted; and a short milk tube part 3d which is arranged at the other end side of the bore part 3b and closes off the other end part of the shell 2 and through which milk that has been suctioned from the teat at the bore part 3b flows. The milking device is also provided with a milk claw 30 to which the short milk tube part 3d is coupled. Vents 3aa, 3da, 36 are provided to a plurality of places on the mouthpiece part 3a, the short milk tube part 3d, and the milk claw 30.

## Description

### TECHNICAL FIELD

The present invention relates to a milking device.

### BACKGROUND ART

Milking is performed using teat cups attached to the teats of a cow. The teat cup includes a cylindrical liner through which milk passes and a shell which covers an outer periphery of an upper portion of the liner while forming a space between the shell and the liner. The teat is inserted into the upper portion of the liner and retained therein. In this state, a pressure in the space between the shell and the liner is increased and reduced. The changes in the pressure cause the upper portion of the liner to elastically deform between an open state and a closed state, whereby milking is carried out while the teat is massaged.

Here, cows for milking may suffer from mastitis. Mastitis reduces the production of milk, deteriorates the quality of milk, incurs costs for treating mastitis, and makes it necessary to dispose of raw milk during restriction of distribution period. Further, mastitis may incur costs for weeding out the affected cow and purchasing an alternative cow.

A prevalence of mastitis is said to be high during periods in which teat orifices are in an open state, that is, one week of an early dry period, one week before parturition, and one week after parturition.

This is because there are bacteria present on a teat surface that could not be wiped off at the time of wiping prior to milking, the bacteria are mixed into milk when milking is carried out, and the milk containing the bacteria penetrates through the teat orifice in the event that backflow of milk (a droplet phenomenon) occurs in a liner.

Prevention of backflow of milk plays an important role in mastitis prevention. There are techniques disclosed for prevention of backflow of milk, examples of which include a teat cup in which a clip is attached to a portion of a liner corresponding to a lower end of a teat so that the liner opens gradually (see Patent Document 1), a teat cup in which a shape and a thickness of a mouthpiece part provided in an upper portion of a liner and those of a bore part disposed in a shell are adjusted so that the liner collapses in an adjusted manner (see Patent Document 2), a teat cup in which a mouthpiece part is provided with a vent opening thereat (see Patent Document 3), a teat cup in which a short milk tube part in a lower portion of a liner is provided with a vent opening thereat (see Patent Documents 4 and 5), a milk claw in which a portion connected to a short milk tube part has a large capacity so that milk is inhibited from staying in a liner (see Patent Document 6), and a milking system in which a pipe through which milk from a milk claw is discharged has a large inner diameter (see Patent Document 7).

Further, Non-Patent Document 1 discloses an average vacuum pressure preferable for a short milk tube part and a mouthpiece part.
Patent Document 1: Japanese Patent No. 4359708
Patent Document 2: US Patent No. 6776120, Specification
Patent Document 3: US Patent No. 8627785, Specification
Patent Document 4: Japanese Unexamined Patent Application (Translation of PCT Application), Publication No. 2016-073861
Patent Document 5: US Patent No. 3476085, Specification
Patent Document 6: U.S. Published Patent Application Publication, No. 2014/020930, Specification
Patent Document 7: US Patent No. 5896827, Specification

Non-Patent Document 1: M.D.Rasmussen, N.P.Madsen, Effects of Milkline Vacuum, Pulsator Airline Vacuum, and Cluster Weight on Milk Yield, Teat Condition, and Udder Health, Journal of Dairy Science, U.S.A, American Dairy Science Association, January 2000, Vol. 83, Issue 1, pp. 77-84

### DISCLOSURE OF THE INVENTION

### Problems to be Solved by the Invention

However, the teat cup disclosed in Patent Document 1 has a complex structure and is not easy to produce. The teat cup disclosed in Patent Document 2 is not sufficiently effective in preventing backflow. Regarding the teat cups of Patent Documents 3, 4, and 5, there is a strong possibility that the vent provided at the mouthpiece part or the short milk tube part is clogged by refuse and will not function. According to Patent Documents 6 and 7, the milk claw is not easy to carry due to the claw's large size and will be difficult to attach to the teats of a cow.

It is an object of the present invention to provide a milking device that can further reliably and effectively curb backflow of milk to reduce the risk of infection of mastitis.

### Means for Solving the Problems

To achieve the object, a milking device according to the present embodiment includes: a teat cup including a liner, the liner having a bore part disposed in a cylindrical shell such that a space is formed between an inner surface of the shell and the bore part, the bore part being elastically deformable between an open state and a closed state, a mouthpiece part disposed at one end of the bore part and closing one end of the shell, the mouthpiece part being configured to allow a teat to be inserted therethrough, and a short milk tube part disposed at the other end of the bore part and closing the other end of the shell, the short milk tube part allowing milk sucked from the teat by the bore part to flow therethrough; a milk claw coupled to the short milk tube part; and vents provided at a plurality of locations selected from a location on the mouthpiece part, a location on the short milk tube part, and a location on the milk claw.

One of the vents is preferably provided at the location on the milk claw.

One of the vents is preferably provided at the location on the short milk tube part, the location on the short milk tube part being in a coupling portion adjacent to the bore part.

### Effects of the Invention

The present invention provides a milking device that can further reliably and effectively curb backflow of milk to reduce the risk of infection of mastitis.

### BRIEF DESCRIPTION OF THE DRAWINGS

FIG. 1 is a longitudinal cross-sectional view of a portion of a milking device 10 according to an embodiment;
FIG. 2 is a diagram illustrating a milking system 100 including the milking device 10 according to the embodiment;
FIG. 3 is a table showing evaluation results of effects exerted by the embodiment;
FIG. 4 is a table showing evaluation results of effects exerted by the embodiment;
FIG. 5A schematically shows a flow of milk m in an Example provided with a plurality of vents, and
FIG. 5B schematically shows a flow of milk m in a Comparative Example provided with one vent.

### PREFERRED MODE FOR CARRYING OUT THE INVENTION

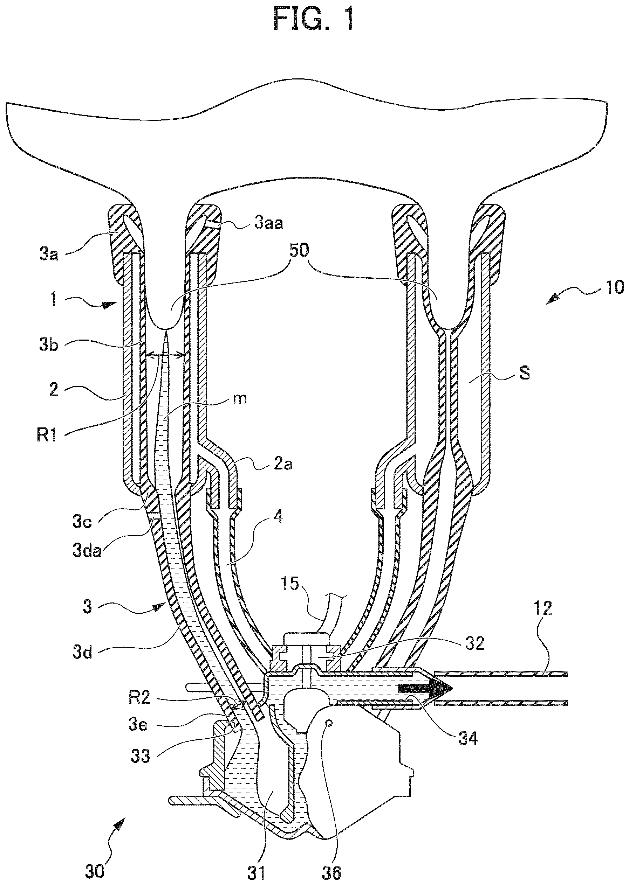

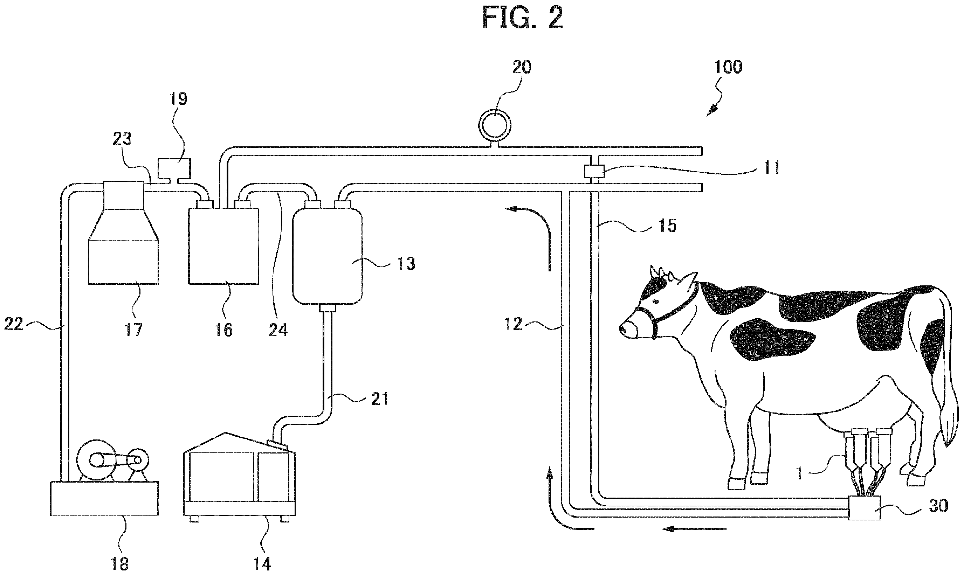

An embodiment of the present invention will be described below. FIG. 1 is a longitudinal cross-sectional view of a portion of a milking device 10 according to the embodiment. The milking device 10 according to the embodiment includes a plurality of teat cups 1 and a milk claw 30. FIG. 1 also shows cow teats 50 inserted in the teat cups 1. FIG. 2 is a diagram illustrating a milking system 100 including the milking device 10 according to the embodiment.

### (Teat Cup 1)

FIG. 1 shows two teat cups 1. However, this is a non-limiting example. The milking device 10 may include four or six teat cups 1.

The teat cup 1 includes a cylindrical liner 3 and a shell 2 that covers an outer periphery of an upper portion of the liner 3.

### (Shell 2)

The shell 2 is a cylindrical member made of a hard material (e.g., stainless steel or a hard resin). The shell 2 includes, on a side surface thereof, a coupling port 2a that is connected to a pressure regulating chamber 32 of the milk claw 30 (to be described later) via a pipe 4.

### (Liner 3)

The liner 3 is a cylindrical one-piece member made of a flexible material. The liner 3 includes, in a top-to-bottom direction, a mouthpiece part 3a, a bore part 3b, and a short milk tube part 3d.

### (Mouthpiece part 3a)

The mouthpiece part 3a is provided on an upper end portion of the liner 3, closes an upper end of the shell 2, and serves as an insertion port through which the cow teat 50 is inserted.

### (Bore part 3b)

The bore part 3b is configured to receive therein the teat 50 inserted through the mouthpiece part 3a, extends downward continuously from the mouthpiece part 3a, and has an outer periphery covered with the shell 2. A space S is formed between the outer surface of the bore part 3b and the inner surface of the shell 2. The bore part 3b is elastically deformable between an open state and a closed state according to changes in pressure in the space S. Here, an average inner diameter of the bore part 3b is denoted by the reference character R1.

### (Short Milk Tube part 3d)

The short milk tube part 3d is configured to allow milk m sucked from the teat 50 to flow therethrough. The short milk tube part 3d includes, in its upper end portion continuous with the bore part 3b, a thick-walled portion 3c that retains a lower end of the shell 2. The short milk tube part 3d extends downward from the thick-walled portion 3c, and has a lower end functioning as an inlet part 3e connected to the milk claw 30 to be described later.

The inlet part 3e has an inner diameter R2 smaller than those of any other portions of the short milk tube part 3d. However, in the short milk tube part 3d, the portion below the thick-walled portion 3c may have a constant diameter that is equal to the inner diameter R2 of the inlet part 3e.

### (Milk Claw 30)

The milk claw 30 includes a milk chamber 31 and the pressure regulating chamber 32.

The milk chamber 31 includes an inlet insertion port 33 into which the inlet part 3e of the short milk tube part 3d is inserted. Flows of milk m from the plurality of liners 3 meet in the milk chamber 31. The milk m gathered in the milk chamber 31 of the milk claw 30 passes through a milk line 12 connected to a discharge port 34, and then, flows into a milk receiver 13 shown in FIG. 2.

The pressure regulating chamber 32 is connected to the pipe 4 extending from the coupling port 2a described above, and to a pulsator line 15 extending to a pulsator 11 to be described later. When the pulsator 11 is in operation, a pulsation pressure for milking is provided to the space S between the outer surface of the bore part 3b and the inner surface of the shell 2 through the pulsator line 15 and the pipe 4.

### (Vents)

Next, vents will be described. The milking device 10 according to the embodiment includes vents provided at a plurality of locations selected from a location on the mouthpiece part 3a of the liner 3, a location on the short milk tube part 3d of the liner 3, and a location on the milk claw 30. The vent has a diameter of 0.5 mm to 1.0 mm.

FIG. 1 shows that the plurality of vents include three vents provided at three locations, namely, a vent 3aa on a side surface of the mouthpiece part 3a, a vent 3da on a side surface of the thick-walled portion 3c of the short milk tube part 3d, and a vent 36 on a side surface of the milk claw 30. However, this is a non-limiting example. It is suitable that at least two of these locations are provided with the vents.

The bore part 3b of the embodiment is not provided with any vent. This is because a vent provided on the bore part 3b may cause leakage of milk therefrom. However, the leakage of milk can be prevented by provision of a check valve-equipped vent below the bore part 3b. The leakage of milk from the vent can also be prevented by using a liner 3 made of a hydrophobic material to increase an angle of contact of milk m. In these cases, a vent may be provided on the bore part 3b.

### (Milking System 100)

As shown in FIG. 2, the milking system 100 provided with the milking device 10 according to the embodiment includes the teat cups 1, the milk claw 30, the pulsator line 15, and the milk line 12 that have been described above. The milking system 100 further includes the milk receiver 13, a bulk cooler 14, a trap 16, a vacuum tank 17, a vacuum pump 18, the pulsator 11, and other components such as a vacuum pressure regulator 19 and a vacuum gauge 20.

Note that in the Examples and Comparative Examples to be described later, a "low-level" milking system was used, in which the milk line 12 extending from the milking system 100 to the milk receiver 13 is located below the milk claw 30.

### (Pulsator 11)

The pulsator 11 is connected to the pressure regulating chamber 32 of the milk claw 30 via the pulsator line 15. The pulsator 11 performs control to introduce and discharge, at regular time intervals, air into and from the space S formed between the outer surface of the bore part 3b and the inner surface of the shell 2 and connected to the pressure regulating chamber 32 via the pipe 4. The pressure regulation performed in the space S in this manner causes the bore part 3b to open and close.

Specifically, when air in the space S is discharged, the pressure in the space S becomes equal to the pressure in the bore part 3b, whereby the bore part 3b is brought into the open state. On the other hand, when air flows into the space S, the pressure in the space S increases, whereby the bore part 3b becomes deflated to be brought into the closed state. The expansion and contraction of the bore part 3b, which result in the alternation of the open state and the closed state, provide a massage effect to the teat. The effect provided in this way is similar to the effect of massage given by a calf drinking milk by sucking a teat of the mother cow, whereby milk ejection is promoted.

### (Milk Receiver 13)

The milk receiver 13 is a container for temporarily reserving milk m conveyed from the milk claw 30 through the milk line 12.

### (Bulk Cooler 14)

The bulk cooler 14 is a component for storing the milk m that has been reserved in the milk receiver 13 and conveyed from a bottom portion of the milk receiver 13 through a pipe 21.

### (Vacuum Pump 18)

The vacuum pump 18 is connected to the vacuum tank 17 via a vacuum pipe 22. The vacuum tank 17 is connected to the trap 16 via a vacuum pipe 23 to which the vacuum pressure regulator 19 is mounted. The trap 16 is connected to the milk receiver 13 via a vacuum pipe 24, and to the milk claw 30 via the pulsator 11.

The inlet part 3e of the short milk tube part 3d is inserted into the inlet insertion port 33 of the milk claw 30. The milk line 12 is attached to the discharge port 34 of the milk claw 30. The coupling port 2a on a side portion of the shell 2 is connected to the pressure regulating chamber 32 of the milk claw 30 via the pipe 4. The pressure regulating chamber 32 of the milk claw 30 is connected to the pulsator 11 via the pulsator line 15. Thereafter, the teat 50 is inserted into the bore part 3b through the mouthpiece part 3a.

In this state, the vacuum pump 18 continuously provides a vacuum pressure for milking to the interior of the liner 3, while the pulsator 11 provides a pulsating vacuum pressure to the space S.

This pulsating vacuum pressure causes the bore part 3b to expand and contract. As a result, lactation is promoted, so that milk m is ejected from the teat 50 to the interior space of the bore part 3b. The ejected milk m is conveyed to the milk line 12 via the milk claw 30.

The milking device 10 according to the embodiment includes the plurality of vents. Due to the plurality of vents, the milking device 10 according to the embodiment can exert a significant effect of curbing backflow of milk m in the liner 3 during milking.

In the following, results of an evaluation will be described which was performed on the effect of curbing backflow of milk m exerted by the milking device 10 of the embodiment provided with the plurality of vents. The evaluation was conducted using the following liners 3, milk claw 30, and pulsator 11, and other components.

### (Liners 3)

As the liners 3, N-III type liners and J225S type liners (manufactured by ORION MACHINERY CO., LTD.) made of transparent silicone were used, so that backflow of milk m occurring inside the liner 3 was able to be observed.

In the case of the N-III type liner, the average inner diameter R1 of the bore part 3b is 22 mm, while the inner diameter of the short milk tube part 3d is 11 mm. In the case of the J225S type liner, the average inner diameter R1 of the bore part 3b is 22 mm, while the inner diameter of the short milk tube part 3d is 10.5 mm.

The vacuum pressure in the liner 3 and that in the milk claw 30 were set to 44 kPa, using the vacuum pump 18 and the vacuum pressure regulator 19.

### (Milk Claw 30)

The milk claw 30 has an internal volume of 415 mL. The inlet insertion port 33 connected to the inlet part 3e of the liner 3 has an inner diameter of 10.5 mm. The discharge port 34 connected to the milk line 12 has an inner diameter of 14.5 mm. The milk line 12 connected to the discharge port 34 has an inner diameter of 15 mm.

### (Pulsator 11)

As the pulsator 11, a product of ORION MACHINERY CO., LTD. was used. Vacuum lasting for 0.6 seconds and non-vacuum lasting for 0.4 seconds were generated such that the bore part 3b repeated a cycle of 1 second consisting of a non-contraction state (water flowable state) lasting for 0.6 seconds and a contraction state (water non-flowable state) lasting for 0.4 seconds 60 times. In this manner, the bore part 3b alternated between the non-contraction state and the contraction state. This value is a standard value of a practical milking operation.

First, milking devices 10 including the N-III liners as the liners 3 were prepared. The milking devices 10 of Examples 1 to 3 included two vents at two locations with respect to each liner 3, whereas the milking devices 10 of Comparative Examples 1 to 3 included only one vent at one location with respect to each liner 3. Each of the vents had a diameter of 0.5 mm.

### (Example 1)

The milking device 10 of Example 1 included two vents with respect to each liner: a vent 36 on the side surface of the milk claw 30 and a vent 3aa on the side surface of the mouthpiece part 3a.

### (Example 2)

The milking device 10 of Example 2 included two vents with respect to each liner: a vent 36 on the side surface of the milk claw 30 and a vent 3da on the side surface of the short milk tube part 3d.

### (Example 3)

The milking device 10 of Example 3 included two vents with respect to each liner: a vent 3aa on the side surface of the mouthpiece part 3a and a vent 3da on the side surface of the short milk tube part 3d.

### (Comparative Example 1)

The milking device of Comparative Example 1 included only one vent with respect to each liner: a vent 36 on the side surface of the milk claw 30.

### (Comparative Example 2)

The milking device of Comparative Example 2 included only one vent with respect to each liner: a vent 3aa on the side surface of the mouthpiece part 3a.

### (Comparative Example 3)

The milking device of Comparative Example 3 included only one vent with respect to each liner: a vent 3da on the side surface of the short milk tube part 3d.

Ten liners 3 were prepared for each of the Examples and the Comparative Examples, and were used during milking. Milk m was caused to flow from the interior of the short milk tube part 3d into the milk claw 30, and then, was discharged from the discharge port 34.

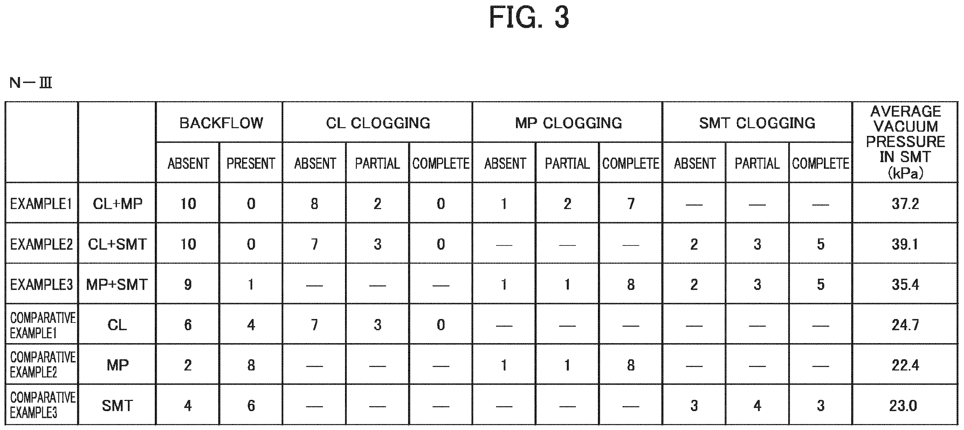

The milking was performed in this way under ordinary milking conditions (two times of milking a day) to study changes over time. At the time of milking subsequently after day 10 (i.e., after 20 times of milking), a visual observation was conducted to check the presence or absence of backflow. The results are shown in FIG. 3.

At the time of milking subsequently after day 10 (i.e., after 20 times of milking), an average vacuum pressure in the short milk tube parts 3d was measured using TriScan™ (a device for measuring a pressure at an end of a tube provided to the device; manufactured by Orion Westfalia Surge Co., Ltd.). The measurement was conducted in the following manner. The end of the tube was connected to a metal injection needle (having a pipe inner diameter of 22 G, 1/22 inch, 1.2 mm). The short milk tube part 3d was pierced with the injection needle, and the vacuum pressure in the short milk tube part 3d was continuously measured for 10 seconds. An average vacuum pressure was determined by averaging the pressures measured during the period of 10 seconds. One liner experiencing a serious clogging was selected from each of the milking devices of the Examples and the Comparative Examples, and the measurement was conducted on the selected liner. The results are also shown in FIG. 3.

Further, the following milking devices 10 including the J225S type liners as the liners 3 were prepared. The milking device 10 of Example 4 to 6 included two vents at two locations with respect to each liner 3, whereas the milking devices 10 of Comparative Examples 4 to 6 included only one vent at one location with respect to each liner 3. Each of the vents had a diameter of 0.5 mm.

### (Example 4)

The milking device 10 of Example 4 included two vents with respect to each liner: a vent 36 on the side surface of the milk claw 30 and a vent 3aa on the side surface of the mouthpiece part 3a.

### (Example 5)

The milking device 10 of Example 5 included two vents with respect to each liner: a vent 36 on the side surface of the milk claw 30 and a vent 3da on the side surface of the short milk tube part 3d.

### (Example 6)

The milking device 10 of Example 6 included two vents with respect to each liner: a vent 3aa on the side surface of the mouthpiece part 3a and a vent 3da on the side surface of the short milk tube part 3d.

### (Comparative Example 4)

The milking device of Comparative Example 4 included only one vent with respect to each liner: a vent 36 on the side surface of the milk claw 30.

### (Comparative Example 5)

The milking device of Comparative Example 5 included only one vent with respect to each liner: a vent 3aa on the side surface of the mouthpiece part 3a.

### (Comparative Example 6)

The milking device of Comparative Example 6 included only one vent with respect to each liner: a vent 3da on the side surface of the short milk tube part 3d.

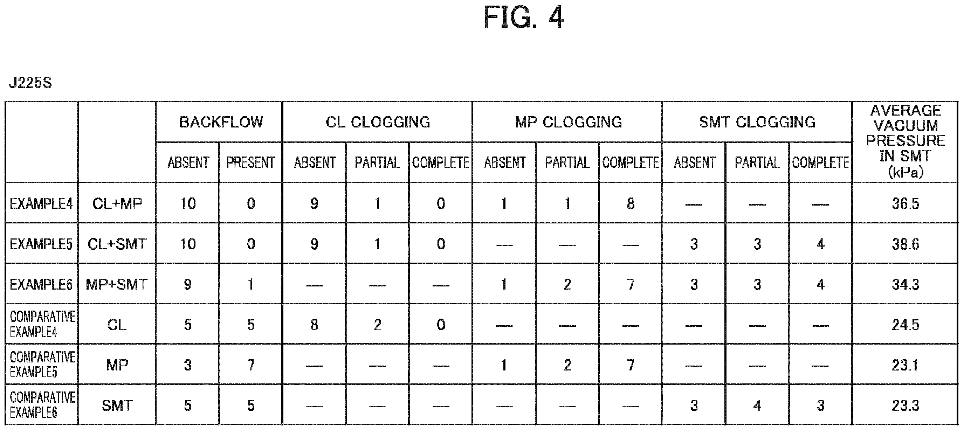

Ten liners 3 were also prepared for each of the Examples and the Comparative Examples, and were used under the ordinary milking conditions (two times of milking a day) to study changes over time. At the time of milking subsequently after day 10 (i.e., after 20 times of milking), a visual observation was conducted to check the presence or absence of backflow. The results are shown in FIG. 4. Like FIG. 3, FIG. 4 also shows an average vacuum pressure in the short milk tube part 3d measured at the time of milking subsequently after day 10 (i.e., after 20 times of milking).

In FIGS. 3 and 4, "CL" denotes the vent 36 on the milk claw 30, "MP" denotes the vent 3aa on the mouthpiece part 3a, and "STM" denotes the vent 3da on the short milk tube part 3d.

In FIGS. 3 and 4, the value in each cell in the column of "Present" under "Backflow" column indicates the number of the liners 3, out of the ten liners, in which backflow of milk reaching the teat was confirmed by the visual observation of the behavior of the flow of milk in the liners 3. The value in each cell in the column of "Absent" under "Backflow" column indicates the number of the liners in which backflow was not observed. Regarding the columns of "CL Clogging", "MP Clogging", and "STM Clogging", a state of the respective vent is indicated by "Absent", "Partial", and "Complete". "Absent" represents a state where no clogging occurred, "Partial" represents a state where a partial clogging occurred, and "Complete" represents a state where a complete clogging occurred. The value in each cell indicates the number of the liners, out of the ten liners, which were in the corresponding state.

### (Evaluation Results)

### (Backflow)

FIGS. 3 and 4 demonstrate the following.
(1) Backflow was not observed in all the ten liners of Examples 1 and 2 having the vent 36 on the milk claw 30 and the vent 3aa on the mouthpiece part 3a, and in all the ten liners of Examples 4 and 5 having the vent 36 on the milk claw 30 and the vent 3da on the short milk tube part 3d.
(2) Backflow was not observed in nine liners out of the ten liners of Examples 3 and 6 having the vent 3aa on the mouthpiece part 3a and the vent 3da on the short milk tube part 3d.
(3) Backflow was observed in four liners out of the ten liners of Comparative Example 1 having only the vent 36 on the milk claw 30, and in five liners out of the ten liners of Comparative Example 4 also having only the vent 36 on the milk claw 30.
(4) Backflow was observed in eight liners out of the ten liners of Comparative Example 2 having only the vent 3aa on the mouthpiece part 3a, and in seven liners out of the ten liners of Comparative Example 5 also having only the vent 3aa on the mouthpiece part 3a.
(5) Backflow was observed in six liners out of the ten liners of Comparative Example 3 having only the vent 3da on the short milk tube part 3d, and in five liners out of the ten liners of Comparative Example 6 also having only the vent 3da on the short milk tube part 3d.

### < Effect Exerted by Provision of Plurality of Vents >

The above results verify that backflow is less likely to occur in the milking devices 10 of the Examples having a plurality of vents with respect to each liner than in the milking devices of the Comparative Examples having one vent with respect to each liner.

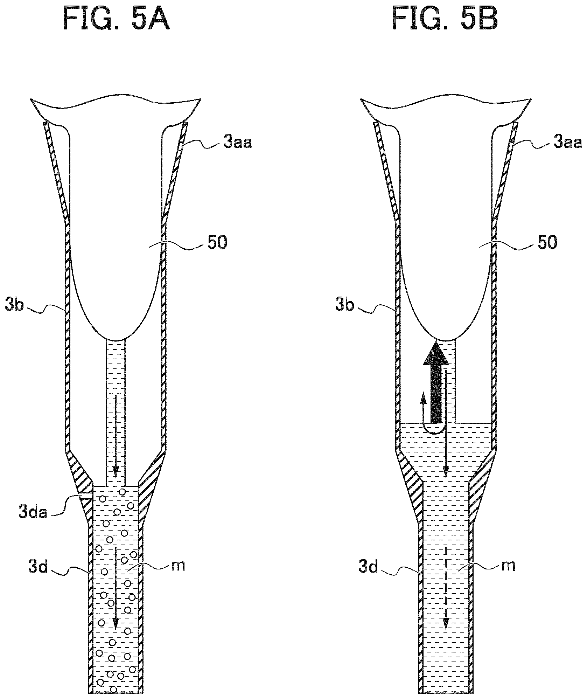

The reason for this would be as follows. FIG. 5A schematically shows a flow of milk m in the Example provided with the plurality of vents 3aa and 3da, and FIG. 5B schematically shows a flow of milk m in the Comparative Example provided with one vent.

As shown in FIG. 5A, the Example, which is provided with the plurality of vents 3aa and 3da, introduces air into the short milk tube part 3d, allowing milk m to flow smoothly. In other words, the provision of the plurality of vents enables stable introduction of external air into the liner 3. As a result, the risk of clogging of milk and the risk of backflow of milk are reduced, and milk can be obtained at a stable pace.

On the other hand, as shown in FIG. 5B, the Comparative Example, which is provided with one vent 3aa, cannot in the least introduce external air if the vent 3aa is clogged. This prevents milk m from being brought into a gas-liquid mixture state, making it highly likely for milk m to form a mass and to stay in the liner 3. The milk m staying in this manner causes backflow of milk. In addition, the mass of milk m blocks forward and backward movement of air between the mouthpiece part 3a and the bore part 3b, between the bore part 3b and the short milk tube part 3d, and between the short milk tube part 3d and the discharge port 34.

This blocking makes it impossible to control the vacuum pressures in the mouthpiece part 3a, the bore part 3b, and the short milk tube part 3d. As a result, a likelihood increases that the vacuum pressure in the mouthpiece part 3a and that in the bore part 3b, i.e., the vacuum pressure applied to the teat end becomes lower than a preset value (recommended value).

Note that although the preset value (recommended value) varies to a certain extent depending on the configuration of the milking system 100, it is preferable that the average vacuum pressure in the short milk tube part 3d is 32 kPa or higher, as described in Non-Patent Document 1 cited above, page 77, left column, Abstract, line 2 from the end.

Non-Patent Document 1 further shows, in Table 4 (page 81, upper right portion) and Table 5 (page 82, top portion), that setting the average vacuum pressure in the mouthpiece part 3a and in the bore part 3b to 20 kPa or higher can shorten a milking time. Non-Patent Document 1 also shows that setting the average vacuum pressure to 20 kPa or higher can reduce the risk of detachment of the liner 3 from the teat (risk of liner slip) during milking.

Conversely, when the average vacuum pressure is much lower than 20 kPa, insufficient massage would be given to the teat, and milk would be imperfectly squeezed, thereby prolonging the milking time. Further, when the average vacuum pressure is much lower than 20 kPa, the vacuum pressure in the mouthpiece part 3a and that in the bore part 3b decrease significantly. If the average vacuum pressures approach 0 kPa, it becomes extremely likely for the liner slip to occur.

Likewise, when the average vacuum pressure in the short milk tube part 3d is much lower than 32 kPa, it becomes highly likely that the milking takes a longer time and the liner slip occurs.

As can be seen from the foregoing, proper milking requires that the average vacuum pressure in the mouthpiece part 3a be 20 kPa or higher and the average vacuum pressure in the short milk tube part 3d be 32 kPa or higher. When milk stays, the average vacuum pressure tend to decrease due to gradual ingress of air through, for example, a clogged vent and a gap between the liner 3 and the teat.

In this situation, the provision of the plurality of vents enables introduction of a sufficient amount of air into the liner 3. This feature prevents milk from forming a mass, and allows milk in a gas-liquid mixture state to be obtained. Further, even if one vent at one location is clogged, air can be introduced through the rest of the vents at the other locations. This feature makes it easy to adjust the average vacuum pressures in the mouthpiece part 3a, the bore part 3b, and the short milk tube part 3d within the respective normal ranges. As a result, the milking time can be shortened. In addition, detachment of the liner 3 from the teat can be inhibited.

### < Effect Exerted by Provision of Claw Vent 36 and Provision of Mouthpiece part Vent 3aa and/or Short Milk tube part Vent 3da >

From the results described in (1) and (2) above, it has been confirmed that the vent 36 on the milk claw 30 preferably constitutes one of the plurality of vents.

This is because the results of Comparative Examples 1 and 4 having only the vent 36 on the milk claw 30 show that none of the liners experienced complete clogging of the vent 36. Thus, the vent 36 on the milk claw 30 is considered to be resistant to clogging.

Further, since the claw vent 36 is the vent closest to the discharge port 34, air introduced through the claw vent 36 brings milk in the milk claw 30 and milk in the milk line 12 into a gas-liquid mixture state, thereby exerting an effect of pushing the milk out.

On the other hand, despite the absence of clogging, backflow occurred in four liners of Comparative Example 1 and in five liners of Comparative Example 4. This means that the vent 36 on the milk claw 30 is not so effective in curbing backflow.

The reason for this would be that the claw vent 36, which is located closer than the liner 3 to the discharge port 34, has a small effect on the flow of milk in the liner 3.

Therefore, if the claw vent 36 is provided, it is preferable to use the claw vent 36 in combination with at least the mouthpiece part vent 3aa or the short milk tube part vent 3da. It is naturally possible to use one or both of the mouthpiece part vent 3aa and the short milk tube part vent 3da in combination with the claw vent 36. Since the mouthpiece part vent 3aa and the short milk tube part vent 3da have a drawback of being prone to clogging, the claw vent 36 performs a function as a backup when the mouthpiece part vent 3aa and the short milk tube part vent 3da are clogged.

### < Effect Exerted by Provision of Mouthpiece part Vent 3aa >

The results of Comparative Examples 2 and 5 having only the vent 3aa on the mouthpiece part 3a show that eight or seven liners 3 out of the ten liners 3 experienced complete clogging of the vent 3aa, and two or three liners 3 experienced partial or no clogging of the vent 3aa. Thus, the vent 3aa on the mouthpiece part 3a is very prone to clogging.

On the other hand, backflow did not occur in 100%, i.e., in both of the two liners of Comparative Example 2 experiencing partial or no clogging of the vent. Backflow did not occur in 100%, i.e., in all of the three liners of Comparative Example 5 experiencing partial or no clogging of the vent. This means that the vent 3aa on the mouthpiece part 3a is highly effective in curbing backflow.

### < Effect Exerted by Provision of Short Milk tube part Vent 3da >

The results of Comparative Examples 3 and 6 having only the vent 3da on the short milk tube part 3d show that three liners 3 out of the ten liners 3 experienced complete clogging of the vent 3da, and seven liners 3 experienced partial or no clogging of the vent3da. Thus, the vent 3da on the short milk tube part 3d is slightly prone to clogging.

On the other hand, backflow did not occur in four liners constituting 57% of the seven liners of Comparative Example 3 experiencing partial or no clogging of the vent. Backflow did not occur in five liners constituting 71% of the seven liners of Comparative Example 6 experiencing partial or no clogging of the vent. This means that the vent 3aa on the mouthpiece part 3a is effective in curbing backflow.

### < Effect Exerted by Provision of Mouthpiece part Vent 3aa and Short Milk tube part Vent 3da >

In the case where the mouthpiece part vent 3aa and the short milk tube part vent 3da are provided as the vents provided at the plurality of locations, air is introduced through the mouthpiece part vent 3aa and mixed with milk, so that milk is brought into a gas-liquid mixture and flows smoothly toward the milk claw 30. Further, introduction of air through the short milk tube part vent 3da accelerates the flow of milk in a gas-liquid mixture state. The synergistic effect (combination) of the provision of the mouthpiece part vent 3aa and the provision of the short milk tube part vent 3da is considered to make milk flow more smoothly, and to enhance the effect of curbing backflow. Thus, combined use of these two vents would exert a greater effect of curbing backflow than using only one of these vents.

### (Check of Vacuum Pressure in Short Milk tube part 3d)

In the Examples, the average vacuum pressure in the short milk tube part 3d was within the recommended range, i.e., 32 kPa or higher.

By contrast, in the Comparative Examples, the average vacuum pressure in the short milk tube part 3d was much lower than 32 kPa due to the clogging. Thus, according to the Comparative Examples, it is highly likely that the milking time is prolonged and the risk of the liner slip increases. In fact, the liner slip did not occur in the Examples, whereas some of the liners of the Comparative Examples experienced the liner slip.

As can be seen, according to the present embodiment, which includes the vents provided at the plurality of locations, even if one of the vents is clogged, at least another of the vents functions effectively. Consequently, air is introduced into the liner, and the milk m in a gas-liquid mixture state flows easily. As a result, the milk m is inhibited from staying in the liner 3, making it possible to inhibit the milk m from flowing backward toward the teat 50.

In particular, a combination of the vent 36 on the milk claw 30 that is resistant to clogging and at least one of the vent 3aa on the mouthpiece part 3a and the vent 3da on the short milk tube part 3d that are highly effective in curbing backflow can provide a significant effect of curbing backflow, while avoiding the risk of malfunction of the vents which can be caused by clogging.

### EXPLANATION OF REFERENCE NUMERALS

- 1:: Teat Cup
- 2:: Shell
- 2a:: Coupling Port
- 3:: Liner
- 3a:: Mouthpiece part
- 3aa:: Vent
- 3b:: Bore part
- 3c:: Thick-Walled Portion
- 3d:: Short Milk tube part
- 3da:: Vent
- 3e:: Inlet
- 10:: Milking Device
- 11:: Pulsator
- 12:: Milk Line
- 13:: Milk Receiver
- 14:: Bulk Cooler
- 15:: Pulsator Line
- 18:: Vacuum Pump
- 30:: Milk Claw
- 31:: Milk Chamber
- 32:: Pressure Regulating Chamber
- 33:: Inlet Insertion Port
- 34:: Discharge Port
- 36:: Vent
- 50:: Teat
- 100:: Milking System

## Claims

1. A milking device comprising:
a teat cup including a liner,
the liner having
a bore part disposed in a cylindrical shell such that a space is formed between an inner surface of the shell and the bore part, the bore part being elastically deformable between an open state and a closed state,
a mouthpiece part disposed at one end of the bore part and closing one end of the shell, the mouthpiece part being configured to allow a teat to be inserted therethrough, and
a short milk tube part disposed at the other end of the bore part and closing the other end of the shell, the short milk tube part allowing milk sucked from the teat by the bore part to flow therethrough;
a milk claw coupled to the short milk tube part; and
vents provided at a plurality of locations selected from a location on the mouthpiece part, a location on the short milk tube part, and a location on the milk claw.

2. The milking device according to claim 1, wherein
one of the vents is provided at the location on the milk claw.

3. The milking device according to claim 1 or 2, wherein
one of the vents is provided at the location on the short milk tube part, the location on the short milk tube part being in a coupling portion adjacent to the bore part.
